# EUROPEAN PATENT APPLICATION

(11) **EP 4 647 719 A1**
(43) Date of publication of application: **12.11.2025**
(21) Application number: 24784230.5
(22) Date of filing: 01.04.2024
(51) Int. Cl.: G01C 21/00

(54) **METHOD FOR CONSTRUCTING MAP AND RELATED APPARATUS**

(30) Priority: 06.04.2023 CN 202310384020
(71) Applicant: Huawei Technologies Co., Ltd., Shenzhen, Guangdong 518129 (CN)
(72) Inventor: LUO, Wentao, Shenzhen, Guangdong 518129 (CN); WANG, Yaoyuan, Shenzhen, Guangdong 518129 (CN); ZHANG, Ziyang, Shenzhen, Guangdong 518129 (CN); ZHOU, Shunbo, Shenzhen, Guangdong 518129 (CN); LI, Jiawei, Shenzhen, Guangdong 518129 (CN)
(74) Representative: Goddar, Heinz J.
(86) International application number: PCT/CN2024/085277
(87) International publication number: WO 2024/208146

(57) **Abstract**

A map construction method and a related apparatus are provided. The method includes: obtaining sensing data, where the sensing data is obtained by detecting, via a sensor of a mobile apparatus, a physical space in which the mobile apparatus is located (210), where pre-arranged first markers are placed in the physical space; identifying, based on the sensing data, second markers having a pairing relationship in the first markers (220); generating a virtual obstacle based on the second markers (230), where the virtual obstacle is configured to restrict traveling of the mobile apparatus in the physical space; and constructing a map of the physical space based on the virtual obstacle (240). The virtual obstacle is generated by identifying and pairing markers pre-placed in the physical space, to restrict traveling of the mobile apparatus in a position corresponding to the virtual obstacle in the physical space. This does not depend on an existing map, and has high universality.

## Description

This application claims priority to Chinese Patent Application No. 202310384020.2, filed with the China National Intellectual Property Administration on April 6, 2023 and entitled "MAP CONSTRUCTION METHOD AND RELATED APPARATUS", which is incorporated herein by reference in its entirety.

### TECHNICAL FIELD

This application relates to the field of vehicle technologies, and in particular, to a map construction method and a related apparatus.

### BACKGROUND

An autonomous mobile apparatus (for example, a self-driving vehicle, a floor-cleaning robot, or a food delivery robot) may sense ambient environment information via a sensor, and complete map construction.

As a user has an increasingly high requirement on sensing, planning, and navigation technologies for the autonomous mobile apparatus, in some application scenarios of the autonomous mobile apparatus, the user expects to specify some areas that are forbidden to be explored by a robot. However, if physical obstacles are arranged at boundaries of these areas, walking of a person is affected. Therefore, a requirement of enabling the autonomous mobile apparatus to generate a "virtual obstacle" becomes a technical research and development requirement.

In a currently known method, the user needs to manually add a virtual obstacle to an existing map, and after the autonomous mobile apparatus is started, path planning is performed based on the map to which the virtual obstacle is added. However, this solution is not applicable to an application scenario without a map, and does not have high universality.

### SUMMARY

This application provides a map construction method and a related apparatus, to cause a mobile apparatus to automatically identify and generate a virtual obstacle, thereby improving universality.

According to a first aspect, this application provides a map construction method. The method may be performed by a mobile apparatus. Alternatively, the method may be performed by a component (for example, a chip or a chip system) configured in the mobile apparatus, or may be implemented by a logical module or software that can implement all or a part of functions of the mobile apparatus. This is not limited in this application.

For example, the method includes: obtaining sensing data, where the sensing data is obtained by detecting, via a sensor of the mobile apparatus, a physical space in which the mobile apparatus is located, where pre-arranged first markers are placed in the physical space; identifying, based on the sensing data, second markers having a pairing relationship in first markers; generating a virtual obstacle based on the second markers, where the virtual obstacle is configured to restrict traveling of the mobile apparatus in the physical space; and constructing a map of the physical space based on the virtual obstacle.

Based on the foregoing solution, the mobile apparatus generates the virtual obstacle by identifying and pairing markers placed in the physical space, to restrict traveling of the mobile apparatus in a position corresponding to the virtual obstacle in the physical space. This does not depend on an existing map, and has high universality.

With reference to the first aspect, in some possible implementations, the first marker is an object having a preset identification shape, and the identification shape identifies the first marker.

With reference to the first aspect, in some possible implementations, the identifying, based on the sensing data, second markers having a pairing relationship in first markers includes: identifying the first markers based on the sensing data; and determining, as the second markers, markers satisfying a preset pairing rule in the first markers.

With reference to the first aspect, in some possible implementations, the preset pairing rule includes at least one of a first pairing rule and a second pairing rule, where the first pairing rule is a rule based on a distance between every two first markers; and the second pairing rule is a rule based on identification numbers of the first markers, and the identification number is determined based on the identification shape.

With reference to the first aspect, in some possible implementations, the first pairing rule includes: a distance between every two second markers having a pairing relationship is the shortest in distances between any two of the first markers for which pairing is not completed.

With reference to the first aspect, in some possible implementations, the method further includes: when there are at least two intersecting virtual obstacles in a plurality of generated virtual obstacles, adjusting the at least two intersecting virtual obstacles, to obtain a plurality of non-intersecting virtual obstacles.

With reference to the first aspect, in some possible implementations, the second pairing rule includes: Identification numbers of every two second markers having a pairing relationship are consecutive, where a smaller identification number in the identification numbers is an odd number, and a larger identification number in the identification numbers is an even number; or identification numbers of every two second markers having a pairing relationship are consecutive, where a smaller identification number in the identification numbers is an even number, and a larger identification number in the identification numbers is an odd number; or identification numbers of every two second markers having a pairing relationship are the same.

With reference to the first aspect, in some possible implementations, the identification shape includes a plurality of holes, hole shapes of the plurality of holes are predefined, and the plurality of holes are used for determining one identification number.

With reference to the first aspect, in some possible implementations, a plurality of holes in each of the markers have one width or a plurality of widths, and each width is used for determining one bit in an identification number.

With reference to the first aspect, in some possible implementations, the plurality of widths are determined based on a minimum resolution of the sensor.

With reference to the first aspect, in some possible implementations, the plurality of widths include N widths, where N≥2, and N is an integer.

For example, a plurality of holes in a specific marker may include n widths, where 1≤n≤N, and n is an integer. For example, the plurality of holes in the marker include a width 1 to a width n. The width 1 may be the minimum resolution of the sensor, the width 2 is twice the minimum resolution of the sensor, the width 3 is three times the minimum resolution of the sensor, and so on, and the width n is n times the minimum resolution of the sensor.

With reference to the first aspect, in some possible implementations, the plurality of widths include a first width and a second width, the second width is M times the first width, M≥2, M is an integer, and the first width is an integer multiple of the minimum resolution of the sensor.

With reference to the first aspect, in some possible implementations, M=2, and the first width is the minimum resolution of the sensor.

In other words, the second width is twice the first width, and the first width is once the minimum resolution of the sensor.

With reference to the first aspect, in some possible implementations, the preset pairing rule includes the first pairing rule and the second pairing rule, and the method further includes: switching, based on a preset condition, between the first pairing rule and the second pairing rule for use.

In other words, when both the first pairing rule and the second pairing rule are deployed on the mobile apparatus, the mobile apparatus may switch, based on the preset condition at any time, between the first pairing rule and the second pairing rule for use.

According to the first pairing rule, a pairing relationship between the markers can be quickly determined when many markers are identified. According to the second pairing rule, although the second pairing rule has high accuracy, a pairing speed is low when many markers are identified. Therefore, in a possible implementation, the preset condition may include: using the first pairing rule when the identified marker is greater than a preset threshold; or using the second pairing rule when the identified marker is less than or equal to a preset threshold.

With reference to the first aspect, in some possible implementations, the sensor includes a radar and/or a camera.

It may be understood that, when the sensor does not include a visual sensor such as a camera, for example, detection is performed via only the radar, this not only can reduce hardware costs, but also can avoid using an image recognition technology in an algorithm. In other words, a large amount of work such as data collection, data marking, and model training does not need to be performed, so that time costs and labor costs can be saved. When the sensor includes a visual sensor such as a camera, in addition to semantics of the virtual obstacle, the map may further include richer semantics. This helps improve user experience.

With reference to the first aspect, in some possible implementations, after the constructing a map of the physical space based on the virtual obstacle, the method further includes: performing path planning based on the map of the physical space.

With reference to the first aspect, in some possible implementations, the obtaining sensing data includes: during movement of the mobile apparatus, detecting, in real time via the sensor, the physical space in which the mobile apparatus is located, to obtain the sensing data.

According to a second aspect, this application provides a marker, where the marker has a plurality of holes, the plurality of holes have one width or a plurality of widths, each width is used for determining one bit in an identification number, and the identification number identifies different markers by a mobile apparatus.

Based on the foregoing solution, markers are placed in a physical space in advance to facilitate the mobile apparatus in identifying and pairing the markers, to restrict traveling of the mobile apparatus between markers having a pairing relationship in the physical space. This may not depend on an existing map, and has high universality.

According to a third aspect, this application provides a mobile apparatus, including a sensor and a processor. The sensor is configured to: detect a physical space in which the mobile apparatus is located, to obtain sensing data, where pre-arranged first markers are placed in the physical space; and the processor is configured to: identify, based on the sensing data, second markers having a pairing relationship in first markers; generate a virtual obstacle based on the second markers, where the virtual obstacle is configured to restrict traveling of the mobile apparatus in the physical space; and construct a map of the physical space based on the virtual obstacle.

Based on the foregoing solution, via the sensor of the mobile apparatus, the virtual obstacle is generated by identifying and pairing markers placed in the physical space, to restrict traveling of the mobile apparatus in a position corresponding to the virtual obstacle in the physical space. This does not depend on an existing map, and has high universality.

With reference to the third aspect, in some possible implementations, the first marker is an object having a preset identification shape, and the identification shape identifies the first marker.

With reference to the third aspect, in some possible implementations, the processor is specifically configured to: identify the first markers based on the sensing data; and determine, as the second markers, markers satisfying a preset pairing rule in the first markers.

With reference to the third aspect, in some possible implementations, the preset pairing rule includes at least one of a first pairing rule and a second pairing rule, where the first pairing rule is a rule based on a distance between every two first markers; and the second pairing rule is a rule based on identification numbers of the first markers, and the identification number is determined based on the identification shape.

With reference to the third aspect, in some possible implementations, the first pairing rule includes: a distance between every two second markers having a pairing relationship is the shortest in distances between any two of the first markers for which pairing is not completed.

With reference to the third aspect, in some possible implementations, the processor is further specifically configured to: when there are at least two intersecting virtual obstacles in a plurality of generated virtual obstacles, adjust the at least two intersecting virtual obstacles, to obtain a plurality of non-intersecting virtual obstacles.

With reference to the third aspect, in some possible implementations, the second pairing rule includes: Identification numbers of every two second markers having a pairing relationship are consecutive, where a smaller identification number in the identification numbers is an odd number, and a larger identification number in the identification numbers is an even number; or identification numbers of every two second markers having a pairing relationship are consecutive, where a smaller identification number in the identification numbers is an even number, and a larger identification number in the identification numbers is an odd number; or identification numbers of every two second markers that are paired are the same.

With reference to the third aspect, in some possible implementations, the identification shape includes a plurality of holes, hole shapes of the plurality of holes are predefined, and the plurality of holes are used for determining one identification number.

With reference to the third aspect, in some possible implementations, a plurality of holes in each of the markers have one width or a plurality of widths, and each width is used for determining one bit in an identification number.

With reference to the third aspect, in some possible implementations, the plurality of widths are determined based on a minimum resolution of the sensor.

With reference to the third aspect, in some possible implementations, the plurality of widths include a first width and a second width, the second width is M times the first width, M≥2, M is an integer, and the first width is an integer multiple of the minimum resolution of the sensor.

With reference to the third aspect, in some possible implementations, M=2, and the first width is the minimum resolution of the sensor.

With reference to the third aspect, in some possible implementations, the preset pairing rule includes the first pairing rule and the second pairing rule, and the processor is further specifically configured to: switch, based on a preset condition, between the first pairing rule and the second pairing rule for use.

With reference to the third aspect, in some possible implementations, the sensor includes a radar and/or a camera.

With reference to the third aspect, in some possible implementations, the processor is further configured to: perform path planning based on the map of the physical space.

With reference to the third aspect, in some possible implementations, the sensor is specifically configured to: during movement of the mobile apparatus, detect, in real time, the physical space in which the mobile apparatus is located, to obtain the sensing data.

Optionally, the mobile apparatus further includes a memory, and the processor is coupled to the memory.

According to a fourth aspect, this application provides a mobile apparatus. The mobile apparatus may be configured to implement the method in any one of the first aspect and possible implementations of the first aspect. The mobile apparatus includes a corresponding module configured to perform the foregoing method. The module included in the mobile apparatus may be implemented in a software and/or hardware manner.

According to a fifth aspect, this application provides a chip system. The chip system includes a processor configured to support implementation of a function in any one of the first aspect and possible implementations of the first aspect, for example, process sensing data in the foregoing method.

In a possible design, the chip system further includes a memory. The memory is configured to store program instructions and data, and the memory is located inside or outside the processor.

The chip system may include a chip, or may include a chip and another discrete device.

According to a sixth aspect, a computer-readable storage medium is provided. The computer storage medium stores a computer program (which may also be referred to as code or instructions). When the computer program is run by a computer, the method in any one of the first aspect and possible implementations of the first aspect is caused to be performed.

According to a seventh aspect, a computer program product is provided. The computer program product includes a computer program (which may also be referred to as code or instructions). When the computer program is run, the method in any one of the first aspect and possible implementations of the first aspect is caused to be performed.

It should be understood that, the third aspect to the seventh aspect that are of this application correspond to technical solutions in the first aspect and the second aspect that are of this application, and beneficial effects achieved in the aspects and corresponding feasible implementations are similar. Details are not described again.

### BRIEF DESCRIPTION OF DRAWINGS

FIG. 1 is a diagram of a virtual obstacle according to an embodiment of this application;
FIG. 2 is a schematic flowchart of a map construction method according to an embodiment of this application;
FIG. 3 is a diagram of an identification shape of a marker according to an embodiment of this application;
FIG. 4 is a diagram of an identification shape of a marker according to an embodiment of this application;
FIG. 5 is a diagram of a plurality of markers having pairing relationships according to an embodiment of this application;
FIG. 6 is a block diagram of a mobile apparatus according to an embodiment of this application;
FIG. 7 is another schematic flowchart of a map construction method according to an embodiment of this application; and
FIG. 8 is a diagram of a marker according to an embodiment of this application.

### DESCRIPTION OF EMBODIMENTS

The following describes technical solutions of this application with reference to accompanying drawings.

For ease of clearly describing the technical solutions in embodiments of this application, the following descriptions are first made.

First, in embodiments of this application, terms such as "first" and "second" are used for distinguishing same items or similar items that have basically same functions and roles. For example, a first pairing rule and a second pairing rule are used for distinguishing different pairing rules, and a first width and a second width are used for distinguishing between different widths. A sequence of the first pairing rule and the second pairing rule and a sequence of the first width and the second width are not limited. A person skilled in the art may understand that, the terms such as "first" and "second" do not limit a quantity or an execution sequence, and the terms such as "first" and "second" do not limit a specific difference.

Second, in embodiments of this application, terms "include", "have", and any variations thereof are intended to cover a non-exclusive inclusion. For example, an apparatus, a system, a product, or a device including a series of module assemblies, modules, or units is not necessarily limited to those expressly listed module assemblies, modules, or units, but may include other module assemblies, modules, or units not expressly listed or inherent to the apparatus, system, product, or device.

Third, in embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects, but does not exclude a case in which the associated objects are in an "and" relationship. A specific meaning indicated by the character "/" may be understood with reference to the context.

Fourth, in embodiments of this application, words such as "example" and "for example" are used for representing an example, an illustration, or a description. Any embodiment or design solution described as an "example" or "for example" in embodiments of this application should not be construed as being more preferred or having more advantages than another embodiment or design solution. Rather, "example", "for example", or the like is used for presenting a relevant concept in a specific manner.

An autonomous mobile apparatus (for example, a self-driving vehicle, a floor-cleaning robot, or a food delivery robot) may sense ambient environment information via a sensor, and complete map construction. As a user has an increasingly high requirement on sensing, planning, and navigation technologies for the autonomous mobile apparatus, in some application scenarios of the autonomous mobile apparatus, the user expects to specify some areas that are forbidden to be explored by a robot. However, if physical obstacles are arranged at boundaries of these areas, walking of a person is affected. Therefore, a requirement of enabling the autonomous mobile apparatus to generate a "virtual obstacle" becomes a technical research and development requirement.

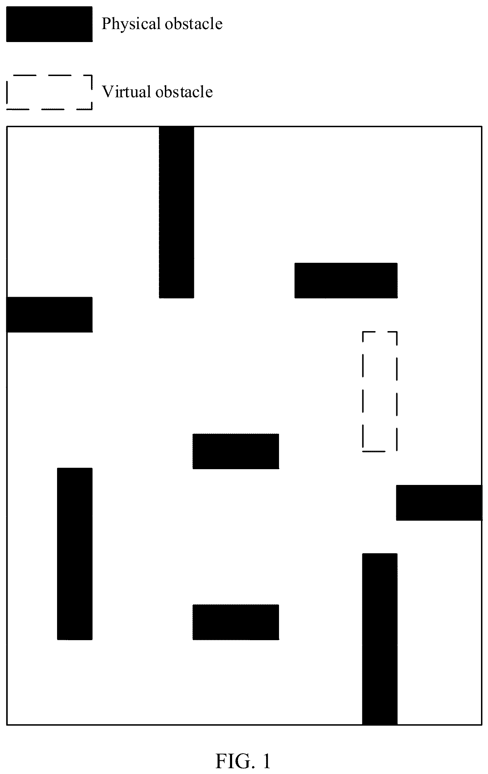

FIG. 1 is a diagram of a virtual obstacle according to an embodiment of this application.

For the virtual obstacle shown in FIG. 1, the virtual obstacle does not actually exist in a physical space. For a creature (for example, a person or an animal), the virtual obstacle does not affect traveling of the creature through a position corresponding to the virtual obstacle in the physical space. For the foregoing autonomous mobile apparatus, the virtual obstacle may restrict traveling of the autonomous mobile apparatus in the position corresponding to the virtual obstacle in the physical space. In addition, it may be understood that, physical obstacles shown in FIG. 1 are obstacles that actually exist in the physical space. Neither a creature nor the autonomous mobile apparatus can travel through positions in which these physical obstacles are located.

In a currently known method, a user needs to manually add a virtual obstacle to an existing map, and after the autonomous mobile apparatus is started, path planning is performed based on the map to which the virtual obstacle is added. However, this solution is not applicable to an application scenario without a map, and does not have high universality.

To resolve the foregoing problem, embodiments of this application provide a map construction method and a related apparatus. A mobile apparatus generates a virtual obstacle by identifying and pairing markers pre-placed in a physical space, to restrict traveling of the mobile apparatus in a position corresponding to the virtual obstacle in the physical space. This does not depend on an existing map, and has high universality.

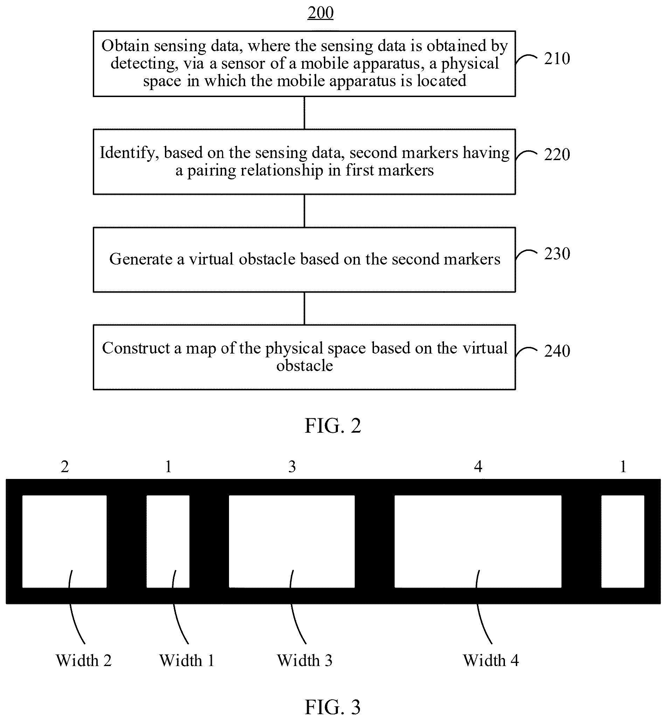

FIG. 2 is a schematic flowchart of a map construction method according to an embodiment of this application.

As shown in FIG. 2, the method 200 may include step 210 to step 240. Steps of the method 200 may be performed by an autonomous mobile apparatus configured with a sensor (for ease of description, in this application, the autonomous mobile apparatus configured with the sensor is denoted as a mobile apparatus). Alternatively, the method 200 may be performed by a component (for example, a chip or a chip system) configured in the mobile apparatus, or may be implemented by a logical module or software that can implement all or a part of functions of the mobile apparatus. This is not limited in embodiments of this application. By way of example but not limitation, the mobile apparatus may include but is not limited to a robot, a vehicle, and the like.

The following describes in detail the steps in FIG. 2.

Step 210: Obtain sensing data, where the sensing data is obtained by detecting, via the sensor of the mobile apparatus, a physical space in which the mobile apparatus is located.

The mobile apparatus may perform the method 200. For example, a sensor may be configured on the mobile apparatus, and the mobile apparatus may detect, via the sensor, the physical space in which the mobile apparatus is located, to obtain the sensing data. Alternatively, the component configured in the mobile apparatus may perform the method 200. For example, a processor (or a chip, a chip system, or the like) of the mobile apparatus may obtain the sensing data from the sensor of the mobile apparatus, where the sensing data is obtained by detecting, via the sensor of the mobile apparatus, the physical space in which the mobile apparatus is located.

In some possible implementations, the sensor includes a radar and/or a camera.

The sensor includes but is not limited to a radar, a camera, and the like.

When the sensor includes a radar, the sensing data includes data obtained by scanning the physical space via the radar. When the sensor includes a camera, the sensing data includes data obtained by photographing the physical space via the camera.

In some possible implementations, the obtaining sensing data includes: during movement of the mobile apparatus, detecting, in real time via the sensor, the physical space in which the mobile apparatus is located, to obtain the sensing data.

It may be understood that, the mobile apparatus may move in the physical space in which the mobile apparatus is located. During movement of the mobile apparatus, the sensor of the mobile apparatus may detect, in real time, the physical space in which the mobile apparatus is located, to obtain the sensing data.

Step 220: Identify, based on the sensing data, second markers having a pairing relationship in first markers.

After obtaining the sensing data, the mobile apparatus may analyze and process the sensing data.

In some possible implementations, the identifying, based on the sensing data, second markers having a pairing relationship in first markers includes: identifying the first markers based on the sensing data; and determining, as the second markers, markers satisfying a preset pairing rule in the first markers.

The mobile apparatus may first identify the first markers based on the sensing data, and then may further identify first markers that are the second markers having the pairing relationship.

It may be understood that, different types of objects have different features. After obtaining the sensing data, the mobile apparatus may analyze the sensing data, and may identify objects in the physical space based on the different features of the different types of objects.

In some possible implementations, the first marker is an object having a preset identification shape, and the identification shape identifies the first marker.

In other words, a feature of the first marker may include the identification shape. The mobile apparatus may determine, when a specific object having the identification shape is identified, the object as the first marker.

The first marker may be understood as a physical object having some particular features, and the identification shape may be the particular feature of the marker. The mobile apparatus may analyze the sensing data. When the sensing data includes data related to the identification shape of the first marker, the mobile apparatus may determine that the first marker is detected. Based on the identification shape of the first marker, when the sensor includes a radar but does not include a visual sensor, for example, a camera, the mobile apparatus may identify, based on the sensing data obtained via the radar, whether there is an object in a sensing range of the radar, that is, can identify objects including the marker; or when the sensor includes a visual sensor, for example, a camera, the mobile apparatus may perform identification on the first marker by using an image recognition technology.

The following describes in detail the identification shape of the first marker.

In some possible implementations, the identification shape includes a plurality of holes, hole shapes of the plurality of holes are predefined, and the plurality of holes are used for determining one identification number.

The identification shape of the first marker includes a plurality of holes, and the shapes of the holes are predefined, so that the mobile apparatus can identify the first marker, and the plurality of holes may be used for determining one identification number. Subsequent pairing processing may be performed based on identification numbers and/or position information of the first markers.

It may be understood that, a quantity of the holes included in the identification shape of the first marker is also preset. In an actual application scenario, a specific quantity of the holes included in the identification shape of the first marker is not limited in this application.

In a possible implementation, a plurality of holes in each of the first markers have one width or a plurality of widths, and each width is used for determining one bit in the identification number.

Different widths of the holes may correspond to different bit values, that is, the holes with the different widths indicate different values. In this way, the mobile apparatus may determine an identification number of each of the first markers based on width information of the plurality of holes in each of the first markers.

In a possible implementation, the plurality of widths are determined based on a minimum resolution of the sensor.

In other words, the width of the hole in the first marker may be designed based on the minimum resolution of the sensor. It may be understood that, if the width of the hole in the first marker is less than the minimum resolution of the sensor, the sensor cannot detect information about the hole. Therefore, the width of the hole in the first marker needs to be greater than the minimum resolution of the sensor, to ensure that the sensor can detect each of the holes in the first marker. It may be further understood that, a distance between the holes is also greater than the minimum resolution of the sensor.

In a possible implementation, the plurality of widths include N widths, where N≥2, and N is an integer.

For example, the plurality of holes in the first marker may include n widths, where 1≤n≤N, and n is an integer. For example, the plurality of holes in the first marker include a width 1 to a width n. The width 1 may be the minimum resolution of the sensor, the width 2 is twice the minimum resolution of the sensor, the width 3 is three times the minimum resolution of the sensor, and so on, and the width n is n times the minimum resolution of the sensor.

In this implementation, the identification number of the first marker may be a group of decimal sequence numbers. By way of example but not limitation, a bit value corresponding to the width 1 may be denoted as 1, a bit value corresponding to the width 2 may be denoted as 2, and so on, and a bit value corresponding to the width n may be denoted as n.

FIG. 3 is a diagram of an identification shape of a marker according to an embodiment of this application.

By way of example but not limitation, if n=4, the identification shape of the first marker is shown in FIG. 3, and the first marker includes five holes, where widths of the holes are sequentially a width 2, a width 1, a width 3, a width 4, and a width 1 from left to right, the identification number of the first marker is "21341".

In another possible implementation, the plurality of widths include a first width and a second width, the second width is M times the first width, M≥2, M is an integer, and the first width is an integer multiple of the minimum resolution of the sensor.

In this implementation, the identification number of the first marker may be a group of binary sequence numbers. By way of example but not limitation, a bit value corresponding to the first width may be denoted as 0, and a bit value corresponding to the second width may be denoted as 1. In this case, the identification number of the first marker may be a group of sequence numbers in a binary format.

Optionally, the second width is twice the first width, and the first width is the minimum resolution of the sensor.

In other words, M=2, the second width is twice the first width, and the first width is once the minimum resolution of the sensor.

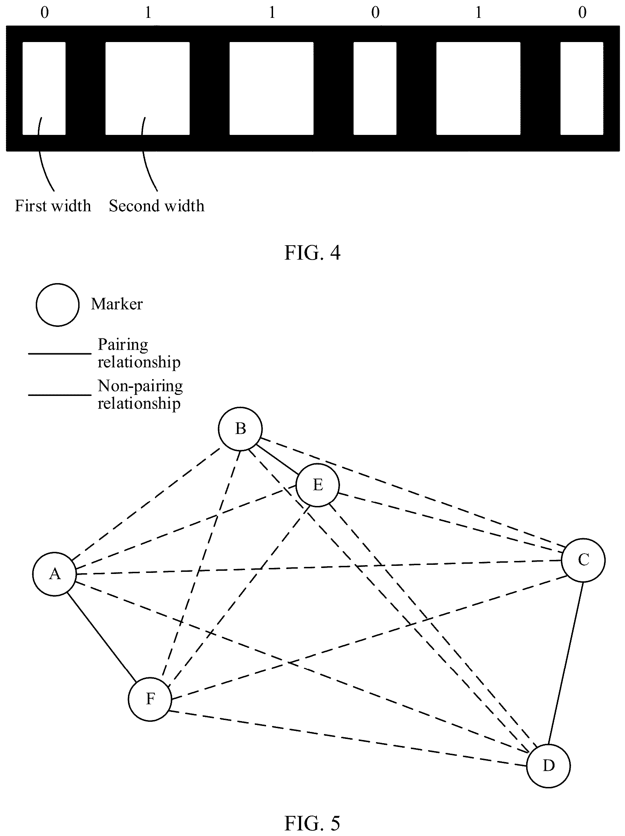

FIG. 4 is a diagram of an identification shape of a marker according to an embodiment of this application.

By way of example but not limitation, the identification shape of the first marker is shown in FIG. 4, and the first marker includes six holes, where widths of the holes are sequentially a first width, a second width, a second width, a first width, a second width, and a first width from left to right For example, as described above, the bit value corresponding to the first width may be denoted as 0, and the bit value corresponding to the second width may be denoted as 1. In this case, the identification number of the marker is "011010".

It may be understood that, the plurality of holes that may be included in the first marker may be of a same width. For example, widths of holes included in a first marker whose identification number is "000000" are all the first width. For another example, widths of holes included in a first marker whose identification number is "111111" are all the second width.

Extensibly, in some possible implementations, the first width and the second width are integer multiples of the minimum resolution of the sensor, and the first width is different from the second width.

In other words, the first marker may include holes with two different widths, and both of the two widths are determined based on the minimum resolution of the sensor.

It should be understood that, FIG. 3 and FIG. 4 are merely examples, and should not constitute any limitation on this application.

It may be understood that, based on the identification shape of the first marker, when the sensor includes the visual sensor, for example, the camera, the mobile apparatus may not only identify the first marker by using the image recognition technology, but may also identify another object. For example, an object that can be identified in an indoor scenario includes but is not limited to a wall, a door, a window, a table, a chair, a bench, and the like. For another example, an object that can be identified in an outdoor scenario includes but is not limited to a house, a vehicle, a pre-placed first marker, and the like. This is not limited in this application.

A pairing relationship of first markers is predefined. The following describes in detail the pairing relationship of the first markers.

As described above, the mobile apparatus may analyze the sensing data, to determine whether first markers are sensed. When a plurality of first markers are sensed, the mobile apparatus may determine, according to the preset pairing rule, first markers that have a pairing relationship.

In some possible implementations, the preset pairing rule includes at least one of a first pairing rule and a second pairing rule, where the first pairing rule is a rule based on a distance between every two first markers; and the second pairing rule is a rule based on the identification numbers of the first markers, and the identification number is determined based on the identification shape of the marker.

To be specific, the preset pairing rule may be designed in three manners:
Design manner 1: The preset pairing rule includes the first pairing rule.
Design manner 2: The preset pairing rule includes the second pairing rule.
Design manner 3: The preset pairing rule includes the first pairing rule and the second pairing rule.

The following separately describes the first pairing rule and the second pairing rule.

### First pairing rule:

The first pairing rule is a rule based on the distance between every two first markers. In other words, when the mobile apparatus senses that there are a plurality of first markers, the mobile apparatus may determine, based on the distance between every two first markers, first markers that have a pairing relationship. The first pairing rule may be understood as a lowprecision pairing rule or a fast heuristic pairing rule. When many first markers are identified, a pairing relationship between the first markers can be quickly determined.

In a possible implementation, the first pairing rule includes: a distance between every two second markers having a pairing relationship is the shortest in distances between any two of the first markers for which pairing is not completed.

The first pairing rule uses a greedy algorithm (or a greedy proximity principle). When the plurality of first markers are identified, the mobile apparatus may calculate a distance between each of the first markers and another first marker, sort, based on magnitudes, a plurality of distances obtained through calculation, and pair two first markers with a shortest distance, that is, determine that there is a pairing relationship between the two first markers with the shortest distance. After the pairing of the two first markers is completed, the two first markers are determined as second markers having the pairing relationship, and the two second markers are removed from the first markers for which pairing is not completed. Then, two first markers having a shortest distance continue to be determined from a plurality of first markers for which pairing is not completed, and the two first markers are determined to have a pairing relationship, and so on, until pairing for all is completed or one first marker for which pairing is not completed is left.

FIG. 5 is a diagram of a plurality of markers having pairing relationships according to an embodiment of this application.

As shown in FIG. 5, during initial detection of the physical space, the mobile apparatus identifies six first markers: a marker A, a marker B, a marker C, a marker D, a marker F, and a marker E. The mobile apparatus calculates distances between the six first markers based on the sensing data, and sorts the distances. If a distance between the marker B and the marker E is the shortest, the mobile apparatus determines that there is a pairing relationship between the marker B and the marker E, that is, the marker B and the marker E may be determined as second markers having the pairing relationship, and the marker B and the marker E are removed from the first markers for which pairing is not completed. In this case, first markers for which pairing is not completed include the marker A, the marker C, the marker D, and the marker F. Then, if a distance between the marker A and the marker F is the shortest, the mobile apparatus determines that there is a pairing relationship between the marker A and the marker F, that is, the marker A and the marker F may be determined as second markers having the pairing relationship, and the marker A and the marker F are removed from the markers for which pairing is not completed. In this case, first markers for which pairing is not completed include the marker C and the marker D. Currently, a distance between the marker C and the marker D is a shortest distance in the first markers for which pairing is not completed. Therefore, the mobile apparatus may determine that there is a pairing relationship between the marker C and the marker D, that is, the marker C and the marker D may be determined as second markers having the pairing relationship, and the marker C and the marker D are removed from the first markers for which pairing is not completed. In this case, there is no first marker for which pairing is not completed.

It may be understood that, the mobile apparatus may move in the physical space. During movement of the mobile apparatus, more first markers may be detected. The mobile apparatus may calculate, based on a first marker newly detected, distances between the newly detected first marker and other markers (including the first marker and the second markers), resort the distances, and perform pairing again. In other words, when the mobile apparatus detects the new first marker, the pairing relationships of the second markers may be updated in real time.

By way of example but not limitation, in the process of determining the shortest distance, if there are a plurality of shortest distances of a same magnitude, the mobile apparatus may randomly determine a pair of first markers from a plurality of first marker pairs of the same distance, and determine the pair as a second marker pair having a pairing relationship. For example, if the distance between the marker B and the marker E, the distance between the marker A and the marker F, and the distance between the marker C and the marker D are the same and the shortest, the mobile apparatus may first randomly determine that the marker A and the marker F are a second marker pair having a pairing relationship, and then determine a next second marker pair having a pairing relationship from the marker B, the marker C, the marker D, and the marker E by analogy. This is not limited in this application.

### Second pairing rule:

The second pairing rule is a rule based on the identification numbers of the first markers. In other words, when the mobile apparatus identifies a plurality of first markers, the mobile apparatus may determine, based on identification numbers of the plurality of first markers, identification numbers that are of first markers and that have a pairing relationship, to determine the first markers that have the pairing relationship. The second pairing rule may be understood as a high-precision pairing rule, and has high accuracy. However, when many first markers are identified, a pairing speed is low. For detailed descriptions of the identification number, refer to related content in the foregoing descriptions. For brevity, details are not described herein again.

In a possible implementation, the second pairing rule includes: identification numbers of every two second markers having a pairing relationship are consecutive, where a smaller identification number in the identification numbers is an odd number, and a larger identification number in the identification numbers is an even number.

By way of example but not limitation, if the mobile apparatus identifies five first markers, and identification numbers of the five first markers are respectively 000001 (equal to decimal 1), 000010 (equal to decimal 2), 000011 (equal to decimal 3), 000100 (equal to decimal 4), and 000101 (equal to decimal 5), the mobile apparatus may determine that the first marker whose identification number is 000001 has a pairing relationship with the first marker whose identification number is 000010, that is, the first marker whose identification number is 000001 and the first marker whose identification number is 000010 may be determined as second markers having the pairing relationship; and determine that the first marker whose identification number is 000011 has a pairing relationship with the first marker whose identification number is 000100, that is, the first marker whose identification number is 000011 and the first marker whose identification number is 000100 may be determined as second markers having the pairing relationship.

In addition, pairing for the first marker whose identification number is 000101 is not completed, and the mobile apparatus may move in the physical space. During movement of the mobile apparatus, more first markers may be detected. The mobile apparatus may then pair, according to the second pairing rule, a first marker newly detected with the first marker for which the pairing is currently not completed.

In another possible implementation, the second pairing rule includes: identification numbers of every two second markers having a pairing relationship are consecutive, where a smaller identification number in the identification numbers is an even number, and a larger identification number in the identification numbers is an odd number.

By way of example but not limitation, if the mobile apparatus identifies five first markers, and identification numbers of the five first markers are respectively 000000 (equal to decimal 0), 000001 (equal to decimal 1), 000010 (equal to decimal 2), 000011 (equal to decimal 3), and 000100 (equal to decimal 4), the mobile apparatus may determine that the first marker whose identification number is 000000 has a pairing relationship with the first marker whose identification number is 000001, that is, the first marker whose identification number is 000000 and the first marker whose identification number is 000001 may be determined as second markers having the pairing relationship; and determine that the first marker whose identification number is 000010 has a pairing relationship with the first marker whose identification number is 000011, that is, the first marker whose identification number is 000010 and the first marker whose identification number is 000011 may be determined as second markers having the pairing relationship.

In addition, pairing for the first marker whose identification number is 000100 is not completed, and the mobile apparatus may move in the physical space. During movement of the mobile apparatus, more first markers may be detected. The mobile apparatus may then pair, according to the second pairing rule, a first marker newly detected with the first marker for which the pairing is currently not completed.

In still another possible implementation, the second pairing rule includes: identification numbers of every two second markers having a pairing relationship are the same.

By way of example but not limitation, if the mobile apparatus identifies five first markers, and identification numbers of the five first markers are respectively 000000 (equal to decimal 0), 000000, 000001 (equal to decimal 1), 000001, and 000100 (equal to decimal 4), the mobile apparatus may determine that two first markers whose identification numbers are both 000000 have a pairing relationship, that is, the two first markers whose identification numbers are both 000000 may be determined as second markers having the pairing relationship; and determine that two first markers whose identification numbers are both 000001 have a pairing relationship, that is, the two first markers whose identification numbers are both 000001 may be determined as second markers having the pairing relationship.

In addition, pairing for the first marker whose identification number is 000100 is not completed, and the mobile apparatus may move in the physical space. During movement of the mobile apparatus, more first markers may be detected. The mobile apparatus may then pair, according to the second pairing rule, a first marker newly detected with the first marker for which the pairing is currently not completed.

If the identification number of the first marker is in the binary format, the binary identification number may be first converted into a decimal number, and then identification numbers that are of first markers and that have a pairing relationship are determined according to the second pairing rule, to determine the first markers having the pairing relationship. This is not limited in this application.

In a possible implementation, the preset pairing rule includes the first pairing rule and the second pairing rule, and the method 200 further includes: switching, based on a preset condition, between the first pairing rule and the second pairing rule for use.

In other words, when both the first pairing rule and the second pairing rule are deployed on the mobile apparatus, the mobile apparatus may switch, based on the preset condition at any time, between the first pairing rule and the second pairing rule for use.

As described above, according to the first pairing rule, the pairing relationship between the first markers can be quickly determined when many first markers are identified. According to the second pairing rule, although the second pairing rule has the high accuracy, the pairing speed is low when many first markers are identified. Therefore, in a possible implementation, the preset condition may include: using the first pairing rule when the identified first marker is greater than a preset threshold; or using the second pairing rule when the identified first marker is less than or equal to a preset threshold.

By way of example but not limitation, the preset threshold is 10. When the identified first marker is greater than 10, the mobile apparatus pairs, according to the first pairing rule, the identified first markers. When the identified first marker is less than or equal to 10, the mobile apparatus pairs, according to the second pairing rule, the identified first markers.

Step 230: Generate a virtual obstacle based on the second markers.

The virtual obstacle is configured to restrict traveling of the mobile apparatus in the physical space. As described above, the virtual obstacle does not actually exist in the physical space. For a creature (for example, a person or an animal), the virtual obstacle does not affect traveling of the creature through a position corresponding to the virtual obstacle in the physical space. For the mobile apparatus, the virtual obstacle may restrict traveling of the mobile apparatus in the position corresponding to the virtual obstacle in the physical space, that is, the virtual obstacle may restrict traveling of the mobile apparatus between the two second markers having the pairing relationship in the physical space.

After determining the second markers having the pairing relationship, the mobile apparatus may generate the virtual obstacle based on the second markers having the pairing relationship. For example, the mobile apparatus may mark a virtual obstacle at a corresponding position and with a corresponding length based on positions of every two second markers having the pairing relationship and a distance between every two second markers. A specific form of marking the virtual obstacle is not limited in this application. By way of example but not limitation, the virtual obstacle may be marked via a symbol, the virtual obstacle may be marked via a line, or the virtual obstacle may be marked via a figure, provided that the mobile apparatus learns of a specific size and a specific position of a virtual obstacle. This is not limited in this application.

In some possible implementations, the method 200 further includes: when there are at least two intersecting virtual obstacles in a plurality of generated virtual obstacles, adjusting the at least two intersecting virtual obstacles, to obtain a plurality of non-intersecting virtual obstacles.

When there are the intersecting virtual obstacles, the mobile apparatus may determine related second markers, that is, generate a plurality of second markers related to the intersecting virtual obstacles, and may cancel pairing relationships between the plurality of second markers, that is, denote the plurality of second markers as first markers, and then re-pair the plurality of first markers according to a preset adjustment rule, until the plurality of non-intersecting virtual obstacles are obtained.

By way of example but not limitation, the preset adjustment rule may include: pairing two first markers with a second shortest distance (that is, a second smallest distance) based on a relationship between each of the plurality of first markers and several other first markers in the plurality of first markers. After the pairing of the two first markers is completed, the two first markers are removed from the plurality of markers, that is, the two first markers are determined as second markers having a pairing relationship. Then, two markers with a second shortest distance continue to be determined from remaining plurality of first markers, and the two first markers are determined to have a pairing relationship. The rest can be deduced by analogy. Finally, two remaining first markers are considered to have a pairing relationship by default.

Step 240: Construct a map of the physical space based on the virtual obstacle.

After generating the virtual obstacle, the mobile apparatus may construct the map of the physical space based on the virtual obstacle.

Constructing the map of the physical space may include: In an initial scenario in which there is no map before the mobile apparatus performs detection, the mobile apparatus constructs and generates the map based on the generated virtual obstacle while performing detection; and may further include: in an initial scenario in which there is a map of the physical space, adding a virtual obstacle to the existing map, that is, updating the existing map based on the generated virtual obstacle.

In a possible implementation, after the constructing a map of the physical space based on the virtual obstacle, the method 200 further includes: performing path planning based on the map of the physical space.

In other words, after the mobile apparatus constructs the map of the physical space, the mobile apparatus may perform some path planning tasks based on the constructed map of the physical space.

By way of example but not limitation, in a home scenario, the mobile apparatus may be a floor-cleaning robot. After constructing an indoor map, the floor-cleaning robot may perform path planning based on the map, to facilitate completing a whole-house cleaning task.

Based on the foregoing solution, the mobile apparatus generates the virtual obstacle by identifying and pairing the markers pre-placed in the physical space, to restrict traveling of the mobile apparatus in the position corresponding to the virtual obstacle in the physical space. This solution does not depend on the existing map. Not only the virtual obstacle can be automatically added to the existing map, but also in the scenario without the map, a map marked with the virtual obstacle can be generated while detection is performed. Therefore, this solution has high universality.

To implement the steps in the method provided in this embodiment of this application, the mobile apparatus may include a hardware structure and/or a software module, and implement the foregoing steps in a form of a hardware structure, a software module, or a hardware structure plus a software module. A specific step in the foregoing steps is performed in a manner of a hardware structure, a software module, or a hardware structure plus a software module. This depends on particular applications and design constraints of the technical solutions.

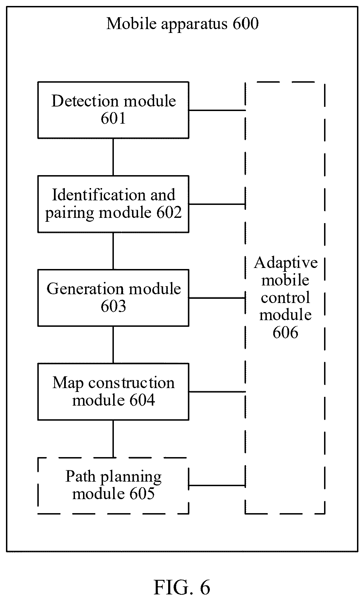

FIG. 6 is a block diagram of a mobile apparatus according to an embodiment of this application. As shown in FIG. 6, the mobile apparatus 600 may include: a detection module 601, an identification and pairing module 602, a generation module 603, and a map construction module 604. The mobile apparatus 600 may be configured to perform steps in the method 200.

When the mobile apparatus 600 performs the steps in the method 200, the detection module 601 is configured to: detect a physical space via a sensor, to obtain sensing data; the identification and pairing module 602 is configured to: identify, based on the sensing data, markers having a pairing relationship; the generation module 603 is configured to: generate a virtual obstacle based on the markers having the pairing relationship, where the virtual obstacle is configured to restrict traveling of the mobile apparatus 600 in the physical space; and the map construction module 604 is configured to: construct a map of the physical space based on the virtual obstacle.

That the map construction module 604 is configured to: construct a map of the physical space based on the virtual obstacle may include: projecting coordinates and a pairing connection line that are of markers for which pairing is completed into a cost map generated by the sensor, to generate a semantic map, that is, a map marked with semantics of the virtual obstacle. The cost map may be a two-dimensional (two-dimensional, 2D) grid map constructed by the mobile apparatus 600 from an actual environment of the physical space based on the sensing data obtained via the sensor, and is a physical obstacle map obtained by sensing a physical obstacle by the sensor. The semantic map may be a map with semantic information and position information of the virtual obstacle obtained by projecting the virtual obstacle into the cost map. This is not limited in this application.

Optionally, the identification and pairing module 602 may be specifically configured to: identify, based on the sensing data and a preset pairing rule, the markers having the pairing relationship.

For related descriptions, refer to the foregoing descriptions. For brevity, details are not described herein again.

Optionally, the preset pairing rule includes a first pairing rule and a second pairing rule, and the identification and pairing module 602 may be further configured to: switch, based on a preset condition, between the first pairing rule and the second pairing rule for use.

For related descriptions, refer to the foregoing descriptions. For brevity, details are not described herein again.

Optionally, the mobile apparatus 600 may further include a path planning module 605. After the constructing a map of the physical space based on the virtual obstacle, the path planning module 605 is configured to: perform path planning based on the map of the physical space.

In addition, the mobile apparatus 600 further includes an adaptive mobile control module 606. When the mobile apparatus 600 detects an odd number of markers, and this results in a case in which pairing cannot be completed, the adaptive mobile control module 606 may be configured to control the mobile apparatus 600 to rotate and/or move, until an even number of markers are found. In other words, the adaptive mobile control module 606 is configured to: when markers in a current sensing range of the sensor cannot be paired, control the mobile apparatus 600 to rotate and/or move, to increase a physical space that can be sensed by the sensor, so that a quantity of markers that can be paired is obtained. In a scenario in which some markers are in a detection blind area at a current angle of view and markers having pairing relationships with the markers has been sensed by the sensor, the mobile apparatus 600 may sense the markers just in the detection blind area by slightly moving. A control policy of the adaptive mobile control module 606 may include initiating a rapid-exploration random tree (rapid-exploration random tree) for performing rapid random exploration, until a new marker is found.

In some possible designs, the sensor includes a radar and/or a camera.

For detailed descriptions, refer to related content in the foregoing descriptions. For brevity, details are not described herein again.

It may be understood that, when the sensor does not include a visual sensor such as a camera, for example, detection is performed via only the radar, this not only can reduce hardware costs, but also can avoid using an image recognition technology in an algorithm. In other words, a large amount of work such as data collection, data marking, and model training does not need to be performed, so that time costs and labor costs can be saved. When the sensor includes a visual sensor such as a camera, in addition to the semantics of the virtual obstacle, the map may further include richer semantics. This helps improve user experience.

An example in which a radar is used as the sensor is used for describing the map construction method provided in this application again with reference to a plurality of modules included in the mobile apparatus 600.

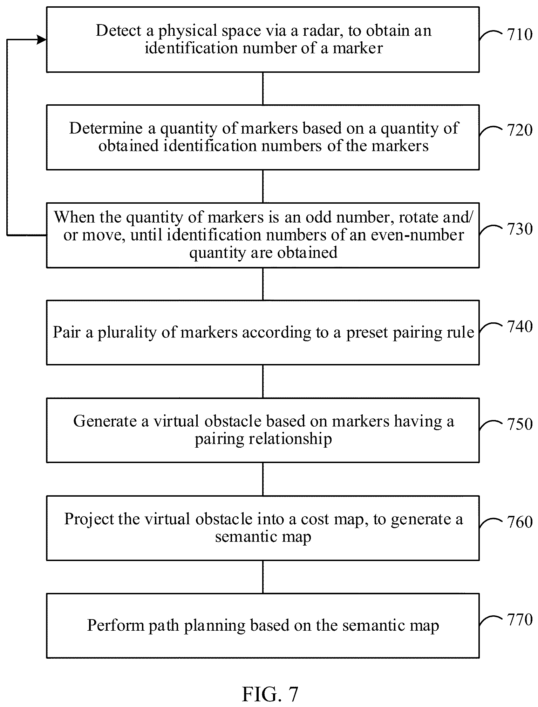

FIG. 7 is another schematic flowchart of a map construction method according to an embodiment of this application.

Step 710: Detect a physical space via a radar, to obtain an identification number of a marker.

By using a detection module, a mobile apparatus may detect the physical space via the radar, to obtain the identification number of the marker. A quantity of obtained identification numbers may be an odd number or an even number.

Step 720: Determine a quantity of markers based on the quantity of obtained identification numbers of the markers.

One marker has one identification number, and the mobile apparatus may determine the quantity of markers based on the quantity of obtained identification numbers of the markers by using an identification and pairing module.

Step 730: When the quantity of markers is an odd number, rotate and/or move, until identification numbers of an even-number quantity are obtained.

When the quantity of markers is an odd number, the mobile apparatus may control, by using an adaptive mobile control module, the mobile apparatus to rotate and/or move, until the identification numbers of an even-number quantity are obtained.

Step 740: Pair a plurality of markers according to a preset pairing rule.

The mobile apparatus may pair a plurality of identified markers according to the preset pairing rule by using the identification and pairing module.

For detailed descriptions of the preset pairing rule, refer to related content in the foregoing descriptions. For brevity, details are not described herein again.

Step 750: Generate a virtual obstacle based on markers having a pairing relationship.

By using a generation module, the mobile apparatus may generate the virtual obstacle based on the markers having the pairing relationship.

Step 760: Project the virtual obstacle into a cost map, to generate a semantic map.

The mobile apparatus may project, by using a map construction module, the virtual obstacle into the cost map, to generate the semantic map.

For detailed descriptions of the cost map and the semantic map, refer to related content in the foregoing descriptions. For brevity, details are not described herein again.

Step 770: Perform path planning based on the semantic map.

The mobile apparatus may perform path planning based on the semantic map by using a path planning module.

It should be understood that, FIG. 7 is merely an example, and an execution sequence of steps in FIG. 7 is not limited in this application. FIG. 7 should not constitute any limitation on this application.

This application further provides a mobile apparatus. The mobile apparatus includes a sensor and a processor, where the sensor is configured to perform sensing and detection; and the processor is configured to invoke and execute a computer program, to cause the mobile apparatus to perform steps in either of the foregoing embodiments in FIG. 2 and FIG. 7.

For example, the sensor is configured to: detect a physical space in which the mobile apparatus is located, to obtain sensing data, where pre-arranged first markers are placed in the physical space; and the processor is configured to: identify, based on the sensing data, second markers having a pairing relationship in first markers; generate a virtual obstacle based on the second markers, where the virtual obstacle is configured to restrict traveling of the mobile apparatus in the physical space; and construct a map of the physical space based on the virtual obstacle.

For detailed descriptions, refer to related descriptions of steps in either of the foregoing embodiments in FIG. 2 and FIG. 7 in the foregoing descriptions.

In some possible implementations, the first marker is an object having a preset identification shape, and the identification shape identifies the first marker.

In some possible implementations, the processor is specifically configured to: identify the first markers based on the sensing data; and determine, as the second markers, markers satisfying a preset pairing rule in the first markers.

In some possible implementations, the preset pairing rule includes at least one of a first pairing rule and a second pairing rule, where the first pairing rule is a rule based on a distance between every two first markers; and the second pairing rule is a rule based on identification numbers of the first markers, and the identification number is determined based on the identification shape.

In some possible implementations, the first pairing rule includes: a distance between every two second markers having a pairing relationship is the shortest in distances between any two of the first markers for which pairing is not completed.

In some possible implementations, the processor is further specifically configured to: when there are at least two intersecting virtual obstacles in a plurality of generated virtual obstacles, adjust the at least two intersecting virtual obstacles, to obtain a plurality of non-intersecting virtual obstacles.

In some possible implementations, the second pairing rule includes: Identification numbers of every two second markers having a pairing relationship are consecutive, where a smaller identification number in the identification numbers is an odd number, and a larger identification number in the identification numbers is an even number; or identification numbers of every two second markers having a pairing relationship are consecutive, where a smaller identification number in the identification numbers is an even number, and a larger identification number in the identification numbers is an odd number; or identification numbers of every two second markers that are paired are the same.

In some possible implementations, the identification shape includes a plurality of holes, hole shapes of the plurality of holes are predefined, and the plurality of holes are used for determining one identification number.

In some possible implementations, a plurality of holes in each of the markers have one width or a plurality of widths, and each width is used for determining one bit in an identification number.

In some possible implementations, the plurality of widths are determined based on a minimum resolution of the sensor.

In some possible implementations, the plurality of widths include a first width and a second width, the second width is M times the first width, M≥2, M is an integer, and the first width is an integer multiple of the minimum resolution of the sensor.

In some possible implementations, M=2, and the first width is the minimum resolution of the sensor.

In some possible implementations, the preset pairing rule includes the first pairing rule and the second pairing rule, and the processor is further specifically configured to: switch, based on a preset condition, between the first pairing rule and the second pairing rule for use.

In some possible implementations, the sensor includes a radar and/or a camera.

In some possible implementations, the processor is further configured to: perform path planning based on the map of physical space.

In some possible implementations, the sensor is specifically configured to: during movement of the mobile apparatus, detect, in real time, the physical space in which the mobile apparatus is located, to obtain the sensing data.

For detailed descriptions, refer to related content in the foregoing descriptions. For brevity, details are not described herein again.

It should be understood that, the mobile apparatus in this application may include but is not limited to a vehicle, a robot (for example, a floor-cleaning robot or a food delivery robot), and the like.

In a possible implementation, the mobile apparatus further includes a memory, the processor is coupled to the memory, and the memory is configured to store the computer program invoked and executed by the processor.

This application further provides a marker, where the marker includes a plurality of holes, the plurality of holes have one width or a plurality of widths, each width is used for determining one bit in an identification number, and the identification number identifies different markers by a mobile apparatus.

As described above, the marker has an identification shape, and the identification shape may include a plurality of holes. For detailed descriptions of the identification shape, refer to related descriptions in the foregoing descriptions. For brevity, details are not described herein again.

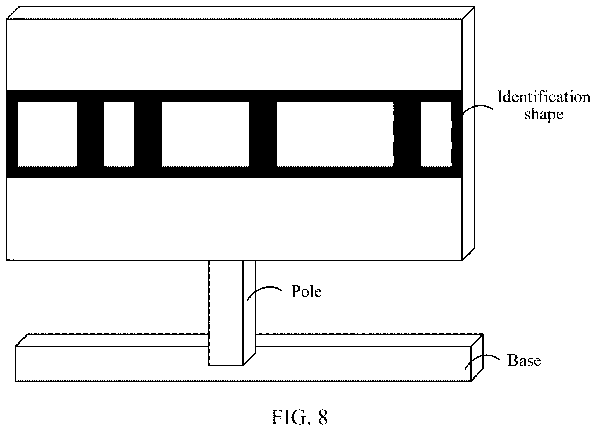

FIG. 8 is a diagram of a marker according to an embodiment of this application.

As shown in FIG. 8, the marker includes an identification shape, a pole, and a base. The identification shape includes a plurality of holes, and the identification shape identifies the marker by a sensor. The pole is configured to support a part in which the identification shape is located. In a possible design, the pole may be a retractable pole, to facilitate adjusting a height of the identification shape, so that the marker can adapt to detection by sensors of different heights. The base is configured to stabilize the marker.

It should be understood that, FIG. 8 is merely an example, and should not constitute any limitation on this application.

This application further provides a chip system. The chip system includes a processor configured to implement functions in steps of the mobile apparatus in either of embodiments in FIG. 2 and FIG. 7.

In a possible design, the chip system further includes a memory. The memory is configured to store program instructions and data, and the memory is located inside or outside the processor.

The chip system may include a chip, or may include a chip and another discrete device.

An embodiment of this application further provides a computer readable storage medium. The computer-readable storage medium stores a computer program. When the computer program is executed by a computer, the computer is caused to perform steps of the mobile apparatus in either of the foregoing embodiments in FIG. 2 and FIG. 7.

An embodiment of this application further provides a computer program product, including a computer program. When the computer program is run, a computer is caused to perform steps of the mobile apparatus in either of the foregoing embodiments in FIG. 2 and FIG. 7.

It should be noted that, the processor in embodiments of this application may be an integrated circuit chip, and has a signal processing capability. During implementation, steps in the foregoing method embodiments may be completed by using a hardware integrated logical circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory. The processor reads information in the memory, and completes the steps in the foregoing methods in combination with hardware in the processor.

It may be understood that, the memory in embodiments of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. Through example but not limitative descriptions, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that, memories of the systems and methods described in this specification are intended to include but are not limited to these memories and any memory of another proper type.

Terms such as "unit" and "module" used in this specification may indicate computerrelated entities, hardware, firmware, a combination of hardware and software, software, or software in execution.

A person of ordinary skill in the art may be aware that, various illustrative logical blocks (illustrative logical blocks) and steps (steps) that are described in embodiments disclosed in this specification may be implemented by electronic hardware or a combination of computer software and electronic hardware. Whether such functions are performed by hardware or software depends on particular applications and design constraints of the technical solutions. A person skilled in the art may use different methods to implement the described functions for each particular application, but it should not be considered that the implementation goes beyond the scope of this application. In several embodiments provided in this application, it should be understood that, the disclosed apparatuses, devices, and methods may be implemented in other manners. For example, the apparatus embodiments described above are merely examples. For example, division of modules is merely logical function division. In an actual implementation, there may be another division manner. For example, a plurality of modules or components may be combined or integrated into another system, or some features may be ignored or not performed. In addition, displayed or discussed mutual couplings or direct couplings or communication connections may be implemented through some interfaces. Indirect couplings or communication connections between the apparatuses or modules may be implemented in electronic, mechanical, or other forms.

Modules described as separate components may or may not be physically separate, and components displayed as modules may or may not be physical modules, to be specific, may be located in one place or may be distributed on a plurality of network modules. A part or all of the modules may be selected based on an actual requirement to achieve the objectives of the solutions in embodiments.

In addition, functional modules in embodiments of this application may be integrated into one processing module, each of the modules may exist alone physically, or two or more units may be integrated into one module.

In the foregoing embodiments, all or a part of functions of the functional modules may be implemented by using software, hardware, firmware, or any combination thereof. When software is used for implementing embodiments, all or a part of embodiments may be implemented in a form of a computer program product. The computer program product includes one or more computer instructions (programs). When the computer program instructions (programs) are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be embodied in a form of a software product. The computer software product is stored in a storage medium, and includes several instructions for instructing a computer device (which may be a personal computer, a server, a network device, or the like) to perform all or a part of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A mobile apparatus, comprising a sensor and a processor, wherein
the sensor is configured to: detect a physical space in which the mobile apparatus is located, to obtain sensing data, wherein pre-arranged first markers are placed in the physical space; and
the processor is configured to:
identify, based on the sensing data, second markers having a pairing relationship in the first markers;
generate a virtual obstacle based on the second markers, wherein the virtual obstacle is configured to restrict traveling of the mobile apparatus in the physical space; and
construct a map of the physical space based on the virtual obstacle.

2. The apparatus according to claim 1, wherein the first marker is an object having a preset identification shape, and the identification shape identifies the first marker.

3. The apparatus according to claim 2, wherein the processor is specifically configured to:
identify the first markers based on the sensing data; and
determine, as the second markers, markers satisfying a preset pairing rule in the first markers.

4. The apparatus according to claim 3, wherein the preset pairing rule comprises at least one of a first pairing rule and a second pairing rule, wherein
the first pairing rule is a rule based on a distance between every two first markers; and the second pairing rule is a rule based on identification numbers of the first markers, and the identification number is determined based on the identification shape.

5. The apparatus according to claim 4, wherein the first pairing rule comprises: a distance between every two second markers having a pairing relationship is the shortest in distances between any two of the first markers for which pairing is not completed.

6. The apparatus according to claim 5, wherein the processor is further specifically configured to:
when there are at least two intersecting virtual obstacles in a plurality of generated virtual obstacles, adjust the at least two intersecting virtual obstacles, to obtain a plurality of non-intersecting virtual obstacles.

7. The apparatus according to claim 4, wherein the second pairing rule comprises: identification numbers of every two second markers having a pairing relationship are consecutive, wherein a smaller identification number in the identification numbers is an odd number, and a larger identification number in the identification numbers is an even number; or
identification numbers of every two second markers having a pairing relationship are consecutive, wherein a smaller identification number in the identification numbers is an even number, and a larger identification number in the identification numbers is an odd number; or
identification numbers of every two second markers that are paired are the same.

8. The apparatus according to claim 4 or 7, wherein the identification shape comprises a plurality of holes, hole shapes of the plurality of holes are predefined, and the plurality of holes are used for determining one identification number.

9. The apparatus according to claim 8, wherein the plurality of holes have one width or a plurality of widths, and each width is used for determining one bit in the identification number.

10. The apparatus according to claim 9, wherein the plurality of widths are determined based on a minimum resolution of the sensor.

11. The apparatus according to claim 10, wherein the plurality of widths comprise a first width and a second width, the second width is M times the first width, M≥2, M is an integer, and the first width is an integer multiple of the minimum resolution of the sensor.

12. The apparatus according to claim 11, wherein M=2, and the first width is the minimum resolution of the sensor.

13. The apparatus according to claim 4, wherein the preset pairing rule comprises the first pairing rule and the second pairing rule, and the processor is further specifically configured to:
switch, based on a preset condition, between the first pairing rule and the second pairing rule for use.

14. The apparatus according to any one of claims 1 to 13, wherein the sensor comprises a radar and/or a camera.

15. The apparatus according to any one of claims 1 to 14, wherein the processor is further configured to:
perform path planning based on the map of the physical space.

16. The apparatus according to any one of claims 1 to 15, wherein the sensor is specifically configured to:
during movement of the mobile apparatus, detect, in real time, the physical space in which the mobile apparatus is located, to obtain the sensing data.

17. A map construction method, wherein the method comprises:
obtaining sensing data, wherein the sensing data is obtained by detecting, via a sensor of a mobile apparatus, a physical space in which the mobile apparatus is located, wherein pre-arranged first markers are placed in the physical space;
identifying, based on the sensing data, second markers having a pairing relationship in the first markers;
generating a virtual obstacle based on the second markers, wherein the virtual obstacle is configured to restrict traveling of the mobile apparatus in the physical space; and
constructing a map of the physical space based on the virtual obstacle.

18. The method according to claim 17, wherein the identifying, based on the sensing data, second markers having a pairing relationship in the first markers comprises:
identifying the first markers based on the sensing data; and
determining, as the second markers, markers satisfying a preset pairing rule in the first markers.

19. A computer-readable storage medium, wherein the computer-readable storage medium stores a computer program; and when the computer program is executed, a computer is caused to perform the method according to claim 17 or 18.

20. A computer program product, comprising a computer program, wherein when the computer program is run, a computer is caused to perform the method according to claim 17 or 18.
